# EUROPEAN PATENT APPLICATION

(11) **EP 4 484 514 A1**
(43) Date of publication of application: **01.01.2025**
(21) Application number: 23780223.6
(22) Date of filing: 24.03.2023
(51) Int. Cl.: C09J 11/06, C09D 123/26, C09D 201/02, C09J 123/26, C09J 201/02, C09D 7/63

(54) **AQUEOUS DISPERSION COMPOSITION**

(30) Priority: 31.03.2022 JP 2022060484
(71) Applicant: TOYOBO MC Corporation, Osaka 530-0001 (JP)
(72) Inventor: YAMANE, Atsushi, Takasago-shi, Hyogo 676-0082 (JP); KASHIHARA, Kenji, Takasago-shi, Hyogo 676-0082 (JP); MIYAZAKI, Keitaro, Takasago-shi, Hyogo 676-0082 (JP)
(74) Representative: Vossius & Partner Patentanwälte Rechtsanwälte mbB
(86) International application number: PCT/JP2023/011943
(87) International publication number: WO 2023/190213

(57) **Abstract**

The present invention relates to an aqueous dispersion composition that is water-based yet exhibits a high level of peel strength and a high level of adhesion to a polyolefin substrate that is hard to adhere to in baking at low temperatures (80°C to 90°C), as well as excellent water resistance. The aqueous dispersion composition contains a modified polyolefin (A) having a weight average molecular weight of 60,000 or more as measured by GPC and having an amount of modification with an α,β-unsaturated carboxylic acid and/or an acid anhydride thereof of less than 1.0 mass%; a nitrogen-containing non-ionic emulsifier (B); and a basic substance (C), in which the aqueous dispersion composition has a Z-average particle size of 200 nm or less.

## Description

### Technical Field

The present invention relates to an aqueous dispersion composition that contains a polyolefin resin, a nitrogen-containing non-ionic emulsifier, and a basic substance, and that is suitable for use in coating agents, primers, paints, inks, adhesives, and the like.

### Background Art

Polyolefin resins, such as polypropylene, are heavily used in automotive parts, films, and molded products because of their low cost and excellent properties. However, polyolefin resins are difficult to paint or bond due to their non-polarity. Thus, modified polyolefins, such as acid-modified polyolefins and acid-modified chlorinated polyolefins, have been developed for painting or printing polyolefin resins and laminating or bonding films.

With the global environmental protection movement on the rise, the entire paint industry is also actively working to reduce CO₂, a cause of global warming, by reducing VOCs in paints and energy consumption in baking and drying furnaces. In automotive coating lines, water-based or low-VOC paints are increasingly used for coating layers.

As compared with solvent-based paints that penetrate and diffuse into a substrate or swell on a substrate to improve adhesive power and thereby achieve excellent adhesion, water-based paints lack such effects, thus resulting in reduced adhesion.

In the meantime, due to recent changes in the composition of bumper substrates to reduce material costs and thickness, some bumper substrates are becoming more difficult for paints to adhere to, and there is an increasing demand for water-based paints that adhere better to materials that are hard to adhere to.

As part of the efforts to reduce energy consumption, attempts have been made to lower the baking temperature in automotive coating lines. However, due to the adhesion issue, water-based coating lines are facing a challenge in improving adhesive power in low-temperature baking.

### Citation List

### Patent Literature

PTL 1: Japanese Patent No. 5023557
PTL 2: JP2005-126615A

### Summary of Invention

### Technical Problem

PTL 1 discloses a method for forming a coating film by coating a substrate with an aqueous modified-polyolefin resin composition and drying the coated substrate by baking at 80°C to 90°C, wherein the melting point of the aqueous modified-polyolefin resin composition is lower than the drying temperature by a range of 19°C to 26°C. However, the adhesive strength was insufficient. PTL 2 discloses an aqueous dispersion containing a high-molecular-weight polyolefin and a surfactant; however, the dispersion is insufficient in achieving adhesion in low-temperature baking.

The present invention was made in view of the current status above, and an object of the invention is to provide an aqueous dispersion composition that is water-based yet exhibits a high level of peel strength and a high level of adhesion to a polyolefin substrate that is hard to adhere to in baking at low temperatures (80°C to 90°C), as well as excellent water resistance.

### Solution to Problem

As a result of extensive research, the present inventors found that the problems described above can be solved by an aqueous dispersion composition containing a specific modified polyolefin (A), a nitrogen-containing non-ionic emulsifier (B), and a basic substance (C), wherein the modified polyolefin (A) has a Z-average particle size of 200 nm or less. Then, they completed the present invention. Specifically, the gist of the present invention is as follows.

Specifically, the present invention relates to an aqueous dispersion composition containing a modified polyolefin having a weight average molecular weight as measured by GPC of 60,000 or more and having a modification amount of less than 1.0 mass% (A), a nitrogen-containing non-ionic emulsifier (B), and a basic substance (C), wherein the modified polyolefin (A) has a Z-average particle size of 200 nm or less in the aqueous dispersion composition.

The modified polyolefin (A) preferably has a melting point of 60°C to 85°C, and preferably does not contain chlorine.

The amount of the nitrogen-containing non-ionic emulsifier (B) added is preferably 10 to 45 mass% per 100 parts by mass of the modified polyolefin resin (A).

If the aqueous dispersion composition contains an anionic group-containing water-soluble polymer (D), it is preferred that the anionic group-containing water-soluble polymer (D) have an acid value of 100 mg to 500 mg KOH/g-resin, and the content be 0 to 2 mass% per 100 parts by mass of the modified polyolefin (A).

The acid-modified polyolefin (A) is preferably a propylene-α-olefin copolymer with a butene content of 2 to 35 mass% in the polyolefin component.

An adhesive or a paint containing any one of the aqueous dispersions described above. A coating film containing any one of the aqueous dispersions described above from which the aqueous medium has been removed.

A laminate comprising a layer derived from the paint or the adhesive described above.

### Advantageous Effects of Invention

When used as a primer for polypropylene substrates, the aqueous dispersion composition of the present invention, which is water-based, can provide a coating film exhibiting a high level of peel strength and a high level of adhesion to a polyolefin substrate that is hard to adhere to in baking at a low temperature (80°C to 90°C), as well as water resistance. Thus, the aqueous dispersion composition can be suitably used in paints and adhesives, and can be particularly suitably used as an automotive paint.

### Description of Embodiments

The following describes embodiments of the present invention in detail.

### Modified Polyolefin A

The modified polyolefin (A) for use in the present invention is a polyolefin obtained by modifying a propylene-α-olefin copolymer with an acid. The acid component of the acid-modified polyolefin for use in the present invention includes α,β-unsaturated carboxylic acids and/or their acid anhydrides. The modified polyolefin (A) is preferably one obtained by grafting a propylene-α-olefin copolymer with at least one of α,β-unsaturated carboxylic acid and an acid anhydride thereof.

The propylene-α-olefin copolymer contains propylene and α-olefin as copolymerization components. The propylene-α-olefin copolymer is preferably a propylene-1-butene copolymer or a copolymer of propylene-1-butene (main component) with α-olefin. The α-olefin for use other than propylene and butene is, for example, one, or two or more of the following: ethylene, isobutene, 1-pentene, 3-methyl-1-pentene, 1-hexene, 1-heptene, 1-octene, 4-methyl-1-pentene, and vinyl acetate. Of these α-olefins, ethylene is preferred.

The propylene-α-olefin copolymer preferably contains a propylene component of 50 mass% or higher, more preferably 60 mass% or higher, and particularly preferably 65 mass% or higher. A propylene-α-olefin copolymer containing a propylene component in an amount within these ranges leads to excellent adhesion (adherence properties) to propylene substrates and other polyolefin substrates. The 1-butene component is present in an amount of preferably 2 to 35 mass%, more preferably 3 to 33 mass%, and particularly preferably 5 to 31 mass% in the olefin component. A propylene-α-olefin copolymer containing a 1-butene component in an amount within these ranges enables the formation of a resin with a melting point suitable for the coating film formation process, in which drying is performed at 80°C to 90°C.

Examples of the at least one of α,β-unsaturated carboxylic acid and an acid anhydride thereof include maleic acid, itaconic acid, citraconic acid, and acid anhydrides thereof. Of these, acid anhydrides are preferred, and maleic anhydride is more preferred. Specific examples include maleic anhydride-modified propylene-butene copolymers and maleic anhydride-modified propylene-ethylene-butene copolymers. These acid-modified polyolefins may be used alone or in a combination of two or more.

The method for producing an acid-modified polyolefin is not particularly limited, and can be, for example, a radical graft reaction (i.e., a reaction in which a radical species is generated on a polymer to become a main chain, and the polymer is graft-polymerized with an unsaturated carboxylic acid and an acid anhydride from the radical species that serves as a polymerization initiation point).

Examples of radical generators include, but are not particularly limited to, organic peroxides and azonitriles, with an organic peroxide being preferred for use. Examples of organic peroxides include, but are not particularly limited to, di-tert-butylperoxy phthalate, tert-butyl hydroperoxide, dicumyl peroxide, benzoyl peroxide, tert-butylperoxy benzoate, tert-butyl peroxy-2-ethylhexanoate, tert-butyl peroxypivalate, methyl ethyl ketone peroxide, di-tert-butyl peroxide, and lauroyl peroxide. Examples of azonitriles include azobisisobutyronitrile and azobisisopropionitrile.

The amount of acid modification in the acid-modified polyolefin is preferably 0.1 mass% or higher, and particularly preferably 0.3 mass% or higher. The amount of acid modification in the acid-modified polyolefin is also lower than 1.0 mass%, preferably 0.9 mass% or lower, and particularly preferably 0.8 mass% or lower. The amount of acid modification in the acid-modified polyolefin being 0.1 mass% or higher is likely to achieve excellent dispersibility in water, and the amount of acid modification in the acid-modified polyolefin being lower than 1.0 mass% improves particularly the peel strength and water resistance of the coating film on a polyolefin substrate.

The modified polyolefin (A) has a weight average molecular weight (Mw) of 60,000 or more, preferably 70,000 or more, and particularly preferably 80,000 or more. A molecular weight of 60,000 or more strengthens the cohesive force, and thus leads to excellent adhesion (adherence properties) and water resistance. The upper limit is, although not particularly limited to, preferably 150,000 or less. This improves solubility and tends to make it easier to prepare the aqueous dispersion composition. The weight average molecular weight in the present invention refers to a value as measured by GPC (gel permeation chromatography). Specific measurement conditions are described in the Examples below.

The modified polyolefin (A) is preferably crystalline. The modified polyolefin (A) in a crystalline form is advantageous in terms of its higher cohesive strength and excellent adhesion (adherence properties), water resistance, heat resistance, and chemical resistance, as compared with its amorphous form.

Crystalline polyolefins as used herein refer to those that show a clear melting peak during heating from -100°C to 250°C at an increase rate of 10°C/minute with a differential scanning calorimeter (which is also referred to as "DSC"; Q-2000 produced by TA Instruments Japan). The melting point and heat enthalpy are determined with a DSC, which measures the top temperature and the area of the melting peak while a polyolefin is heated and melted at an increase rate of 10°C/minute, then cooled into a resin form, and heated and melted again.

In regards to the melting point (Tm) of the modified polyolefin (A), it is desirable that the melting point of the modified polyolefin resin (A) is lower than the drying temperature by 20°C to 5°C during the film formation process in which the film is dried at 80 to 90°C. The melting point is preferably 60°C or higher, more preferably 63°C or higher, and particularly preferably 65°C or higher. The melting point is also preferably 85°C or lower, more preferably 83°C or lower, and particularly preferably 80°C or lower. A melting point of 60°C or higher provides a strong cohesive force derived from crystals, and thus achieves excellent peel strength, adhesion (adherence properties), water resistance, heat resistance, and chemical resistance. A melting point of 85°C or lower provides excellent solubility, making it easy to prepare an aqueous dispersion composition.

### Nitrogen-containing Non-ionic Emulsifier (B)

The emulsifier (B) present in the aqueous dispersion of the present invention is a nitrogen-containing non-ionic emulsifier. Use of a nitrogen-containing non-ionic emulsifier improves the water resistance of the coating film. Examples of nitrogen-containing non-ionic surfactants include polyoxyalkylene alkylamine surfactants, such as polyoxyethylene laurylamine, polyoxyethylene stearylamine, polyoxyethylene coco amine, and polyoxyethylene beef tallow amine; polyoxyalkylene amine surfactants, such as polyoxyethylene polyoxypropylene monoamine; and polyoxyalkylene alkylamide surfactants, such as polyoxyethylene oleylamide, polyoxyethylene coco fatty acid amide, polyoxyethylene laurylamide, polyoxyethylene stearylamide, polyoxyethylene beef tallow amide, polyoxyethylene coco fatty acid monoethanolamide, and polyoxyethylene lauryl monoethanolamide. Of these nitrogen-containing non-ionic emulsifiers, polyoxyethylene laurylamine and polyoxyethylene coco amine are preferred due to their less bleeding and resulting excellent peel strength.

The nitrogen-containing non-ionic emulsifier (B) preferably has an alkyl chain carbon number within the range of 10 to 30, and more preferably 12 to 25. An alkyl chain carbon number within the range of 10 or more and 30 or less leads to a suitable hydrophobic interaction, improves the stability with olefin particles, and improves water resistance and peel strength.

The nitrogen-containing non-ionic emulsifier (B) preferably has a mole number of ethylene oxide (EO) (the number of ethylene oxide units per molecule) within the range of 8 to 30, more preferably 9 to 25 or more, and particularly preferably 10 to 20. A mole number of ethylene oxide within the range of 8 to 30 stabilizes water dispersibility during emulsification.

The nitrogen-containing non-ionic emulsifier (B) is preferably 10 parts by mass or more, more preferably 13 parts by mass or more, even more preferably 20 parts by mass or more, and particularly preferably 25 parts by mass or more, per 100 parts by mass of the modified polyolefin resin (A). The nitrogen-containing non-ionic emulsifier (B) is also preferably 45 parts by mass or less, more preferably 42 parts by mass or less, and particularly preferably 40 parts by mass or less, per 100 parts by mass of the modified polyolefin resin (A). The nitrogen-containing non-ionic emulsifier (B) in an amount of 15 parts by mass or more increases emulsifiability and decreases particle size, while improving film-forming properties, thus increasing the likelihood of improving peel strength, whereas the nitrogen-containing non-ionic emulsifier (B) in an amount of 45 parts by mass or less tends to result in a coating film with excellent water resistance.

The method of adding the nitrogen-containing non-ionic emulsifier (B) is not particularly limited. For example, the nitrogen-containing non-ionic emulsifier (B) may be added without diluting it with water or the like, or may be diluted into a 1 to 50 mass% aqueous solution and added. For quick blending into the aqueous dispersion composition, the nitrogen-containing non-ionic emulsifier (B) is preferably added in the form of a 1 to 50 mass% diluted aqueous solution. The emulsifier in the form of an aqueous solution added to the aqueous dispersion composition is rapidly adsorbed onto particles and thus reduces the particle size.

### Basic Substance (C)

The basic substance (C) for use in the present invention neutralizes the acidic groups (carboxyl groups) of the modified polyolefin (A), thus improving the dispersibility of the modified polyolefin (A).

The basic substance (C) is not particularly limited, but is preferably a volatile basic substance. In particular, the basic substance (C) is preferably ammonia or an amine. Examples of amines include, but are not limited to, monomethylamine, dimethylamine, trimethylamine, monoethylamine, mono-n-propylamine, dimethyl-n-propylamine, monoethanolamine, diethanolamine, triethanolamine, N-methylethanolamine, N-aminoethylethanolamine, N-methyldiethanolamine, monoisopropanolamine, diisopropanolamine, triisopropanolamine, N,N-dimethylethanolamine, and N,N-dimethylpropanolamine, with triethylamine and N,N-dimethylethanolamine being particularly preferred. These volatile amines may be used alone or in a combination of two or more.

The basic substance (C) is preferably 0.5 parts by mass or more, more preferably 1 part by mass or more, even more preferably 2 parts by mass or more, and particularly preferably 3 parts by mass or more, per 100 parts by mass of the modified polyolefin (A). The basic substance (C) is also preferably 10 parts by mass or less, more preferably 9 parts by mass or less, even more preferably 8 parts by mass or less, and particularly preferably 7 parts by mass or less. An overly small amount of the basic substance (C) may result in particles with a large particle size dispersed in the obtained aqueous dispersion composition, decreasing storage stability, whereas an overly large amount of the basic substance (C) may decrease the water resistance of the coating film.

### Anionic Group-containing Water-soluble Polymer (D)

The anionic group-containing water-soluble polymer (D) for use in the present invention can reduce the charge on the particle surface of the modified polyolefin (A) in the aqueous dispersion composition. This allows the aqueous dispersion composition with 30 mass% of a solid content of the modified polyolefin to have a constant viscosity within the range of 500 mPa·s or lower.

Additionally, adding the anionic group-containing water-soluble polymer (D) not only reduces the viscosity of the aqueous dispersion composition, but also exhibits the excellent effect of not interfering with an effect of a viscosity adjuster when the composition is made into a paint. A viscosity adjuster achieves a desired viscosity through hydration and association between polar groups in paint. However, using a low-molecular-weight compound, such as an electrolyte, as a charge reducer inhibits this hydration and association between polar groups, possibly making the viscosity adjuster unable to work. However, because the anionic group-containing water-soluble polymer (D) is a high-molecular-weight compound and thus has a limited flow in paint, the anionic group-containing water-soluble polymer (D) is thought to have little interaction with the viscosity adjuster and to not have an impact on the effect of the viscosity adjuster. Specifically, when preparing paints, inks, sealants, primers, adhesives, or the like, it is necessary to add various additives, such as a viscosity adjuster, in addition to the aqueous dispersion composition to prevent dripping during the coating process. The anionic group-containing water-soluble polymer (D) does not inhibit the effect of a viscosity adjuster or the like, and therefore does not cause dripping during the coating process, providing excellent paints, inks, sealants, primers, adhesives, and the like.

The anionic group-containing water-soluble polymer (D) refers to a high-molecular-weight compound that dissolves in water to reduce the charge on the particle surface of the modified polyolefin (A). The anionic group-containing water-soluble polymer (D) is specifically acrylic resin, urethane resin, or epoxy resin each containing a carboxyl group, a sulfonic acid group, a sulfate group, or a phosphate group, and more specifically an anionic group-containing water-soluble polymer mainly composed of polystyrene sulfonic acid, polyacrylic acid, a styrene-maleic anhydride copolymer, a styrene-acrylic monomer copolymer, a styrene-methacrylic monomer copolymer, or the like. These anionic group-containing water-soluble polymers (D) may be used alone or in a combination of two or more.

The anionic group-containing water-soluble polymer (D) preferably has an acid value of 100 mg KOH/g-resin or more, more preferably 130 mg KOH/g-resin or more, even more preferably 150 mg KOH/g-resin or more, particularly preferably 160 mg KOH/g-resin or more, yet more preferably 170 mg KOH/g-resin or more, and most preferably 180 mg KOH/g-resin or more. An acid value of less than 100 mg KOH/g-resin may result in an aqueous dispersion composition with a decreased effect of reducing viscosity. The anionic group-containing water-soluble polymer (D) also preferably has an acid value of 500 mg KOH/g-resin or less, more preferably 490 mg KOH/g-resin or less, even more preferably 480 mg KOH/g-resin or less, particularly preferably 470 mg KOH/g-resin or less, yet more preferably 460 mg KOH/g-resin or less, and most preferably 450 mg KOH/g-resin or less. An acid value exceeding 500 mg KOH/g-resin may result in a coating film with decreased water resistance and may also interfere with the effect of a viscosity adjuster in the preparation of a paint. An acid value within the above ranges is preferred because it gives excellent viscosity of the aqueous dispersion composition and excellent physical properties of the coating film. The acid value of the anionic group-containing water-soluble polymer (D) can be measured in accordance with JIS K-0070-1992.

The anionic group-containing water-soluble polymer (D) has a weight average molecular weight (Mw) of preferably 1,500 or more, more preferably 2,000 or more, even more preferably 3,000 or more, particularly preferably 5,000 or more, yet more preferably 7,000 or more, and most preferably 9,000 or more. The anionic group-containing water-soluble polymer (D) with a weight average molecular weight (Mw) of less than 1,500 may interfere with the effect of a viscosity adjuster during the preparation of a paint. The anionic group-containing water-soluble polymer (D) also has a weight average molecular weight (Mw) of preferably 30,000 or less, more preferably 29,000 or less, even more preferably 28,000 or less, particularly preferably 27,000 or less, yet more preferably 26,000 or less, and most preferably 25,000 or less. The anionic group-containing water-soluble polymer (D) with a weight average molecular weight (Mw) exceeding 30,000 may have decreased solubility in water, possibly resulting in a decreased effect of reducing viscosity. A weight average molecular weight (Mw) within the range of 1,500 or more and 30,000 or less is preferred because it gives the aqueous dispersion composition excellent viscosity and gives the coating film excellent physical properties. The weight average molecular weight of the anionic group-containing water-soluble polymer (D) can be measured by GPC in an atmosphere at 40°C.

The anionic group-containing water-soluble polymer (D) has a solubility in water (20°C) of preferably 5 mass% or higher, more preferably 10 mass% or higher, even more preferably 20 mass% or higher, and yet more preferably 30 mass% or higher. The upper limit is in practice, but not particularly limited to, 50 mass% or lower.

The anionic group-containing water-soluble polymer (D) is preferably 0.1 parts by mass or more, more preferably 0.3 parts by mass or more, even more preferably 0.5 parts by mass or more, and particularly preferably 0.8 part by mass or more, per 100 parts by mass of the modified polyolefin (A). The anionic group-containing water-soluble polymer (D) is also preferably 20 parts by mass or less, more preferably 19 parts by mass or less, even more preferably 18 parts by mass or less, and particularly preferably 17 parts by mass or less. The anionic group-containing water-soluble polymer (D) in an overly small amount may decrease the effect of reducing viscosity, whereas the anionic group-containing water-soluble polymer (D) in an overly large amount may decrease the water resistance of the coating film and may also interfere with the effect of a viscosity adjuster in the preparation of a paint.

The aqueous dispersion containing the modified polyolefin (A) has a Z-average particle size of 200 nm or less, preferably 150 nm or less, more preferably 120 nm or less, even more preferably 100 nm or less, and particularly preferably 80 nm or less. A Z-average particle size of 200 nm or less is likely to provide adhesion (adherence properties) due to a strong anchor effect achieved by the dispersion penetrated into gaps in a propylene substrate, and improves fusion properties during baking, and also improves peel strength due to improved film-forming properties. The lower limit is preferably, but not particularly limited to, 30 nm or more from the viewpoint of improved storage stability.

The aqueous dispersion composition containing the modified polyolefin (A) preferably has a viscosity of 5 mPa·s or more, and more preferably 10 mPa·s or more. The aqueous dispersion composition containing the modified polyolefin (A) also preferably has a viscosity of 300 mPa·s or less, and more preferably 250 mPa·s or less. The aqueous dispersion composition of the present invention has a pH of preferably 5 or more and 10 or less, more preferably 7 or more, particularly preferably 8.3 or more, and even more preferably 8.5 or more.

Although the method for producing the aqueous dispersion composition is not particularly limited, for example, the following method may be used. Specifically, the modified polyolefin (A) and the emulsifier (B) are dissolved in at least one solvent selected from the group consisting of ether solvents, alcohol solvents, and aromatic solvents, and in water, and then a basic substance is added thereto, followed by cooling the mixture and then removing the solvents to obtain the aqueous dispersion composition.

The aqueous dispersion of the resin composition of the present invention has a solids concentration of preferably 10 to 60 mass%, more preferably 20 to 50 mass%, and even more preferably 25 to 45 mass%, based on the total amount of the aqueous dispersion, from the viewpoint of ease of handling the aqueous dispersion.

The ether solvent is not particularly limited, and examples include tetrahydrofuran ("THF" below), propylene glycol monomethyl ether, propylene glycol monoethyl ether, and propylene glycol monopropyl ether. These ether solvents may be used alone or in a combination of two or more.

The alcohol solvent is not particularly limited, and examples include C1-C7 aliphatic alcohols, aromatic alcohols, and alicyclic alcohols. These alcohol solvents may be used alone or in a combination of two or more.

Examples of aromatic solvents include benzene, toluene, xylene, ethylbenzene, isopropylbenzene, and solvent naphtha. These aromatic solvents may be used alone or in a combination of two or more.

The amount of the solvent and water for use can be freely determined. The ratio of modified polyolefin (A):water:solvent is preferably 100:50 to 800:11 to 900 (ratio by mass), and more preferably 100:200 to 400:43 to 233 (ratio by mass).

Additionally, in order to further improve the performance of the aqueous dispersion composition of the present invention, such as water resistance and solvent resistance, a curing agent may be optionally added. Examples of curing agents include, but are not particularly limited to, aqueous polyfunctional carbodiimide resins, aqueous dispersions of polyfunctional isocyanate compounds, aqueous polyfunctional oxazoline resins, water-soluble silane coupling agents containing polyfunctional silyl groups, and aqueous melamine compounds. These curing agents are preferably added in an amount of 2 to 30 parts by mass per 100 parts by mass of the resin in the aqueous dispersion composition of the present invention.

The aqueous dispersion composition of the present invention may further contain various additives, such as fillers, pigments, colorants, and antioxidants, to the extent that they do not impair the effects of the present invention. The amount of these additives is preferably 150 parts by mass or less, more preferably 140 parts by mass or less, and even more preferably 130 parts by mass or less, per 100 parts by mass of the resin in the aqueous dispersion composition. The amount of these additives is also preferably 5 parts by mass or more, and more preferably 2 parts by mass or more. The additives in an amount within the above ranges allow excellent effects of the present invention to be brought about.

The aqueous dispersion composition of the present invention can also be used as an adhesive for various polyolefin substrates, including polypropylene. The aqueous dispersion composition of the present invention may be mixed with a pigment dispersion to obtain a paint, and thus can also be used as a paint. A coating film formed by removing the aqueous medium from the aqueous dispersion composition of the present invention can be used as an adhesive layer to adhere substrates together to form a laminate. A coating film formed by removing the aqueous medium from the aqueous dispersion composition of the present invention can be applied as a coating layer onto a substrate to form a laminate. The aqueous dispersion composition of the present invention is not limited in its use for polyolefin substrates, and can also be used in coating other plastics, wood, metals, and the like. Examples of polyolefin substrates include films, sheets, and molded articles. The coating method is not particularly limited.

The present invention is be described in detail below with reference to Examples. However, the present invention is not limited to these Examples. In the Examples and Comparative Examples, the term "parts" simply indicates "parts by mass." The measurement and evaluation methods used in the present invention are as described below.

### 1) Measurement of Solids Concentration of Aqueous Dispersion Composition

A sample (about 1 g) of an aqueous dispersion was precisely weighed in a 50 mL glass weighing bottle. The weighing bottle containing the sample was then dried in a hot-air dryer at 120°C for 2 hours. The weighing bottle removed from the dryer was placed in a desiccator and left to stand and cooled at room temperature for 30 minutes. The weighing bottle was removed from the desiccator, and the mass was precisely weighed. Then, the percentage by mass of the solids concentration of the aqueous dispersion was calculated from the weight change before and after hot air drying (the formula below). Aqueous dispersion solids concentration (mass%) = 100 - [(the sample mass before hot air drying) - (the sample mass after hot air drying)]/(the sample mass before hot air drying) × 100

### 2) Measurement of Viscosity of Aqueous Dispersion Composition

A sample (0.6 g) was measured with a Viscometer TV-22 (E-type viscometer) produced by Toki Sangyo Co., Ltd., under the following conditions: rotor: No. 0.8° (= 48') × R24, range: H, rotations: 5 rpm, temperature: 25°C.

### 3) Measurement of pH of Aqueous Dispersion Composition

The pH was measured at 25°C using an F-52 pH meter produced by Horiba, Ltd. The measuring device was calibrated by 3-point measurement using a phthalate pH standard solution (pH: 4.01), a neutral phosphate pH standard solution (pH: 6.86), and a borate pH standard solution (pH: 9.18), produced by Fujifilm Wako Pure Chemical Corporation.

### 4) Measurement of Average Particle Size (Z-average Particle Size) of Aqueous Dispersion Composition

The average particle size (Z-average particle size) was measured based on intensity distribution according to a dynamic light scattering method with a Zetasizer Nano-ZS, Model ZEN3600, produced by Malvern Panalytical. The measurement was performed three times at 25°C using a sample obtained by adjusting the solids content of the aqueous dispersion composition to a concentration of 0.05 g/L to determine the average value.

### 5) Measurement of Amount of Acid Modification

The amount of acid modification in the case of acid modification with maleic anhydride was determined by FT-IR (FT-IR8200PC produced by Shimadzu Corporation). First, a calibration solution was prepared by dissolving maleic anhydride at a predetermined concentration. The calibration solution was subjected to FT-IR measurement to create a calibration curve using the absorbance of the stretching peak (1780 cm⁻¹) of the carbonyl bond (C=O) in maleic anhydride. The modified polyolefin (A) was dissolved in chloroform and subjected to FT-IR measurement, and the amount of acid modification with maleic anhydride was determined using the absorbance of the stretching peak (1780 cm⁻¹) of the carbonyl bond in maleic anhydride based on the calibration curve.

### 6) Measurement of Melting Point

The melting point and heat enthalpy in the present invention were values as measured with a differential scanning calorimeter (referred to below as "DSC"; Q-2000 produced by TA Instruments Japan Inc.) from the top temperature of the melting peak, by melting a sample with heating at a rate of 10°C/minute, cooling it into resin, and melting it again with heating.

### 7) Measurement of Glass Transition Temperature

The glass transition temperature (Tg) (°C) of the resin was defined as the temperature at the intersection of a straight line equidistant in the vertical axis direction from the straight lines extending from each baseline in the process in which the temperature was increased again with the curve at a stepwise change in glass transition, under the same conditions as for the measurement of the melting point with a DSC.

### 8) Weight Average Molecular Weight of Modified Polyolefin (A)

The weight average molecular weight of the modified polyolefin (A) was a value as measured by using an Alliance e2695 gel permeation chromatograph produced by Nihon Waters K.K. (referred to below as "GPC"; standard substance: polystyrene resin, mobile phase: tetrahydrofuran, column: Shodex KF-806 + KF-803, column temperature: 40°C, flow rate: 1.0 ml/minute, detector: photodiode array detector (wavelength 254 nm = ultraviolet light)).

### Production Example 1

100 parts by mass of a propylene-butene copolymer (propylene/butene = 69/31 mass%), 300 parts by mass of toluene, and 10 parts by mass of maleic anhydride were placed in a 1 L autoclave. After the mixture was heated to 120°C, 1 part by mass of di-tert-butyl peroxide was added thereto and stirred for 1 hour. Thereafter, the resulting reaction liquid was cooled and then poured into a container containing a large amount of methyl ethyl ketone to precipitate the resin. The liquid containing the resin was then centrifuged to separate and purify an acid-modified propylene-butene copolymer that was graft-polymerized with maleic anhydride from ungrafted maleic anhydride and low-molecular-weight matter. Subsequently, drying was performed under reduced pressure at 70°C for 5 hours to thus obtain a maleic anhydride-modified propylene-butene copolymer (PO-1, melting point: 72°C, amount modified with maleic anhydride: 0.6 mass%, weight average molecular weight: 80,000).

### Production Example 2

100 parts by mass of a propylene-butene copolymer (propylene/butene = 75/25 mass%), 300 parts by mass of toluene, and 10 parts by mass of maleic anhydride were placed in a 1 L autoclave. After the mixture was heated to 120°C, 2 parts by mass of di-tert-butyl peroxide was added thereto and stirred for 1 hour. Thereafter, the resulting reaction liquid was cooled and then poured into a container containing a large amount of methyl ethyl ketone to precipitate the resin. The liquid containing the resin was then centrifuged to separate and purify an acid-modified propylene-butene copolymer that was graft-polymerized with maleic anhydride from ungrafted maleic anhydride and low-molecular-weight matter. Subsequently, drying was performed under reduced pressure at 70°C for 5 hours to obtain a maleic anhydride-modified propylene-butene copolymer (PO-2, melting point: 80°C, amount modified with maleic anhydride: 0.6 mass%, weight average molecular weight: 80,000).

### Production Example 3

A maleic anhydride-modified propylene-butene copolymer (PO-3, melting point: 72°C, amount modified with maleic anhydride: 2.0 mass%, weight average molecular weight: 50,000) was obtained in the same manner as in Production Example 1, except that the amount of maleic anhydride added was changed to 20 parts by mass, and the amount of di-tert-butyl peroxide added was changed to 5 parts by mass.

### Production Example 4

100 parts by mass of a propylene-ethylene copolymer (MFR = 5 g/10 minutes in an atmosphere at 230°C), 150 parts by mass of toluene, 10 parts by mass of maleic anhydride, and 1 part by mass of di-tert-butyl peroxide were added to a 1 L autoclave equipped with a stirrer, and the mixture was heated to 140°C and further stirred for 3 hours. Thereafter, the resulting reaction liquid was cooled and then poured into a container containing a large amount of methyl ethyl ketone to precipitate the resin. The liquid containing the resin was centrifuged to separate and purify an acid-modified propylene-ethylene copolymer that was graft-polymerized with maleic anhydride from (poly)maleic anhydride, and low-molecular-weight matter. Subsequently, drying was performed under reduced pressure at 70°C for 5 hours to thus obtain a maleic anhydride-modified propylene-ethylene copolymer. Subsequently, 100 parts by mass of the maleic anhydride-modified propylene-ethylene copolymer and 1700 parts by mass of chloroform were placed in a 2 L glass-lined reaction vessel, and the vessel was sealed. The liquid in the reaction vessel was heated while being stirred to disperse the mixture, and the mixture was dissolved at an internal temperature of 120°C for 1 hour. After the temperature inside the reaction vessel was cooled to 110°C, 0.5 parts by mass of t-butylperoxy-2-ethylhexaenoate was added, and 70 parts by mass of chlorine was introduced. The temperature inside the reaction vessel was cooled to 60°C, and then 1400 parts by mass of chloroform was distilled off, followed by adding 4 parts by mass of p-t-butylphenyl glycidyl ether as a stabilizer. Thereafter, drying was performed, thereby obtaining a maleic anhydride-modified chlorinated propylene-ethylene copolymer (CPO-1, melting point: 75°C, amount modified with maleic anhydride: 0.8 mass%, chlorine content: 20 mass%, weight average molecular weight: 103,000).

### Production Example 5

A maleic anhydride-modified chlorinated propylene-ethylene copolymer (CPO-2, melting point: 75°C, amount modified with maleic anhydride: 2.5 mass%, chlorine content: 20 mass%, weight average molecular weight: 83,500) was obtained in the same manner as in Production Example 4, except that the amount of maleic anhydride added was changed to 20 parts by mass, and the amount of di-tert-butyl peroxide added was changed to 5 parts by mass.

Table 1 shows the compositions of the aqueous dispersions used in the following Examples and Comparative Examples.

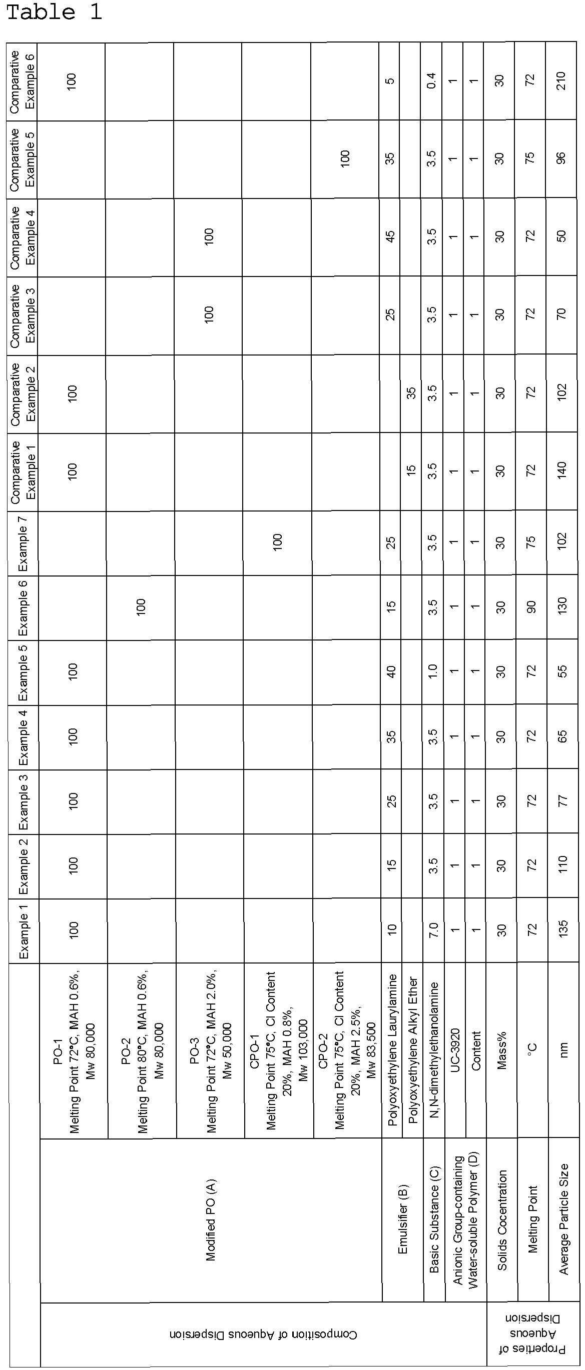

### Example 1

100 parts by mass of modified polyolefin (PO-1), 10 parts by mass of polyoxyethylene laurylamine (B-1) with 10 moles of EO added as an emulsifier, 300 parts by mass of ion-exchanged water, 30 parts by mass of tetrahydrofuran, and 50 parts by mass of toluene were placed in a flask equipped with a stirrer, heated to 90°C, and then heated and dissolved at the same temperature for 1 hour. Subsequently, 3.5 parts by mass of N,N-dimethylethanolamine was added, and the mixture was stirred at the same temperature for 1 hour. Thereafter, the mixture was gradually cooled to 40°C over 1 hour, and then the organic solvent was distilled off under a reduced pressure of 91 kPa, followed by adding 1.0 part by mass of ARUFON UC-3920, thereby obtaining an aqueous dispersion, the properties of which are shown in Table 1.

### Examples 2 to 7

Aqueous dispersion compositions were obtained in the same manner as in Example 1, except that the modified polyolefin (A) shown in Table 1 was used, and the amount of the polyoxyethylene laurylamine (B-1) with 10 moles of EO added as an emulsifier was changed. Table 1 shows their properties.

### Comparative Examples 1 and 2

Aqueous dispersion compositions having the properties shown in Table 1 were obtained in the same manner as in Example 1, except that polyoxyethylene oleyl cetyl ether with 15 moles of EO added as an emulsifier (B-2) was used in an amount of 15 parts by mass and 35 parts by mass, respectively, as shown in Table 1.

### Comparative Examples 3 and 4

Aqueous dispersion compositions having the composition shown in Table 1 were obtained in the same manner as in Example 1, except that modified polyolefin (PO-3) was added in an amount of 100 parts by mass, and the amount of polyoxyethylene laurylamine with 10 moles of EO added (B-1) was changed to 25 parts by mass and 45 parts by mass, respectively.

### Comparative Example 5

An aqueous dispersion composition having the composition shown in Table 1 was obtained in the same manner as in Example 1, except that modified polyolefin (CPO-2) was used in an amount of 100 parts by mass, and the amount of polyoxyethylene laurylamine with 10 moles of EO added (B-1) was changed to 35 parts by mass.

### Comparative Example 6

An aqueous dispersion composition shown in Table 1 was obtained in the same manner as in Example 1, except that the amount of polyoxyethylene laurylamine with 10 moles of EO added (B-1) as an emulsifier was changed to 5 parts by mass, and the amount of N,N-dimethylethanolamine was changed to 0.4 parts by mass.

### Pigment Dispersion

4 parts by mass of water-soluble acrylic resin, 2 parts by mass of conductive carbon black, 36 parts by mass of rutile-type titanium oxide, and 70 parts by mass ion-exchanged water were added and stirred for 30 minutes. Thereafter, the mixture was dispersed in a bead mill for 30 minutes. Subsequently, 5 parts by mass of a urethane-associative thickener and 2 parts by mass of a leveling agent were added thereto, thereby obtaining a pigment dispersion.

### Preparation of Paint Composition

38 parts by mass of the pigment dispersion and 16 parts by mass of a polyester polyurethane dispersion (produced by Sanyo Chemical Industries, Ltd., UXA-310, solids content: 38%) were added to 20 parts by mass of the individual aqueous dispersion obtained above. The mixture was stirred for 10 minutes with a disperser mixer. Subsequently, 1.0 parts by mass of BYK-349 as a leveling agent and 2 parts by weight of an alkaline-swelling thickener (ASE-60 produced by Rohm and Haas) were added thereto dropwise and stirred for 15 minutes to obtain a paint composition. The paint composition was evaluated as follows. Table 2 shows the results.

### Evaluation of Peel Strength

The paint composition was applied to a polypropylene substrate for bumpers (TYC-1175P-G01, produced by Standard Plaque, Inc., 150 mm × 1000 mm × 3 mm) with a spray gun so that the dry film thickness was 10 µm, followed by drying by heating at 80°C for 10 minutes. Subsequently, a commercially available water-based base paint (Retan PG WB Eco, produced by Kansai Paint Co., Ltd.) was applied with a spray gun so that the dry film thickness was 150 pm. After painting, the test specimen was left to stand for 15 minutes in an environment at 23°C, and then baked and dried in a drying furnace at 80°C for 30 minutes, after which the test specimen was taken out. Thereafter, the test specimen was left in an environment at 23°C for 72 hours, and then the peel strength of the test specimen was measured at a tensile rate of 50 mm/minute in an environment at 25°C with a Tensilon RTM-100 produced by A&D Co., Ltd.

### Evaluation Criteria

A: A peel strength of 1000 gf/cm or more
B: A peel strength of 700 or more and less than 1000 gf/cm
C: A peel strength of 500 or more and less than 700 gf/cm
D: A peel strength of less than 500 gf/cm

### Evaluation of Adhesion of Coating Film

The paint composition prepared above was applied to a polypropylene substrate for bumpers (TYC-1175P-G01, produced by Standard Plaque, Inc., 150 mm × 1000 mm × 3 mm) with a spray gun so that the dry film thickness was 10 µm, followed by drying by heating at 80°C for 10 minutes. Subsequently, a commercially available water-based base paint (Rethan PG WB Eco produced by Kansai Paint Co., Ltd.) was applied with a spray gun so that the dry film thickness was 35 µm. After painting, the test specimen was left to stand for 15 minutes in an environment at 23°C, and then baked and dried in a drying furnace at 80°C for 30 minutes, after which the test specimen was taken out. After the test specimen was left to stand for 36 hours in an atmosphere at 25°C, a grid pattern of 2-mm-wide squares (100 squares) was made on the coated surface with a utility knife. Adhesive cellophane tape was adhered onto the grid and peeled off at an angle of 60°. This operation was performed 10 times using new adhesive cellophane tape. A coating film with the surface remaining unchanged after 10 times of peeling was scored 10 points and rated A. A coating film peeling at the tenth peeling operation was scored 9 points and rated B. Coating films peeling in the subsequent peeling operations were scored 8, 7, and 6 points. A coating film that peeled in the first peeling operation was scored 0 points and rated C.

### Evaluation of Water Resistance of Coating Film

A test specimen prepared under the same conditions as in the evaluation of adhesion of the coating films was left to stand in an atmosphere at 25°C for 36 hours and then immersed in warm water at 40°C for 10 days. After changes in the coating film were examined, the adhesion of the coating film was evaluated as described above. A coating film with no change in the surface with a score of 10 for adhesion was evaluated as good and rated "A." A coating film with no change in the surface with a score of 9 for adhesion was rated "B." A coating film with blisters formed or with a score of 8 or lower for adhesion was evaluated as poor and rated "C."

### Storage Stability

The produced paint composition (200 g) was tightly sealed in a polypropylene container and stored at 40°C for 10 days. The viscosity after storage was then measured with a rotational viscometer (TVB-10M produced by Toki Sangyo Co., Ltd.). The change in viscosity before and after storage was measured.

### Evaluation Criteria

A: A change in viscosity before and after storage of lower than 5%
B: A change in viscosity before and after storage of 5% or higher and lower than 10%
C: A change in viscosity before and after storage of 11% or higher and lower than 20%
D: A change in viscosity before and after storage of 20% or higher

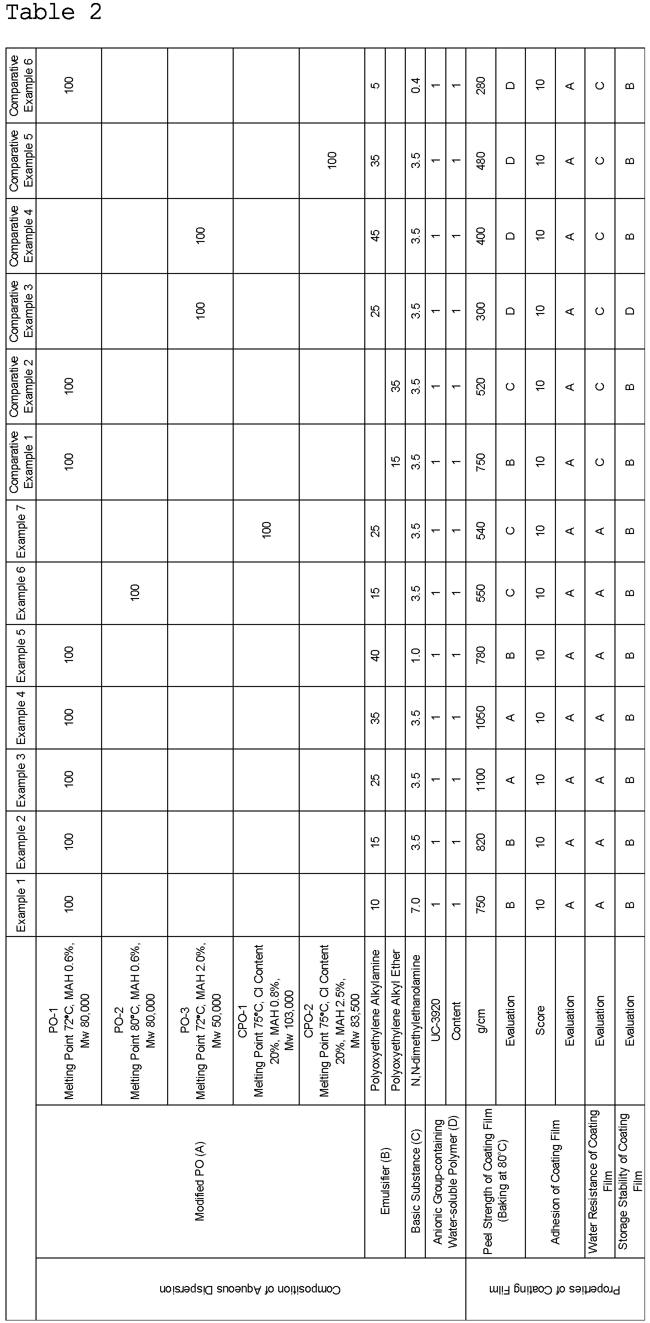

### Discussion of the Results in Table 2

The aqueous dispersion compositions obtained in Examples 1 to 7 were shown to have excellent peel strength, excellent adhesion, and excellent water resistance to the polypropylene substrate for bumpers. On the other hand, Comparative Examples 1 and 2 resulted in poor water resistance and peel strength due to the absence of the nitrogen-containing non-ionic emulsifier (B). Comparative Examples 3 and 4 resulted in poor water resistance and peel strength due to the weight average molecular weight of the modified polyolefin (A) being 60,000 or less. Comparative Example 5 resulted in poor water resistance and peel strength due to the absence of the modified polyolefin (A) modified with an α,β-unsaturated carboxylic acid and/or its acid anhydride in an amount of lower than 1.0 mass%. Comparative Example 6 resulted in poor water resistance and peel strength due to the Z-average particle size of the modified polyolefin (A) being greater than 200 nm.

### Industrial Applicability

The aqueous dispersion composition of the present invention can provide a coating film that exhibits a high level of peel strength and a high level of adhesion to a polyolefin substrate that is hard to adhere to in baking at low temperatures (80°C to 90°C), as well as excellent water resistance. The aqueous dispersion composition can contribute to reducing CO₂ emissions, which are responsible for global warming, by reducing the rate of paint defects in water-based coating systems, reducing VOCs, or reducing energy consumption in baking and drying furnaces.

## Claims

1. An aqueous dispersion composition comprising
a modified polyolefin (A) having a weight average molecular weight of 60,000 or more as measured by GPC and having an amount of modification with an α,β-unsaturated carboxylic acid and/or an acid anhydride thereof of less than 1.0 mass%,
a nitrogen-containing non-ionic emulsifier (B), and
a basic substance (C),
wherein the aqueous dispersion composition has a Z-average particle size of 200 nm or less.

2. The aqueous dispersion composition according to claim 1, wherein the modified polyolefin (A) has a melting point of 60°C to 85°C.

3. The aqueous dispersion composition according to claim 1, wherein the modified polyolefin (A) does not contain chlorine.

4. The aqueous dispersion composition according to claim 1, wherein the amount of the nitrogen-containing non-ionic emulsifier (B) added is 10 to 45 mass% per 100 parts by mass of the modified polyolefin (A).

5. The aqueous dispersion composition according to claim 1, further comprising an anionic group-containing water-soluble polymer (D),
wherein the anionic group-containing water-soluble polymer (D) has an acid value of 100 mg to 500 mg KOH/g-resin, and
wherein the content is 0.1 to 20 mass% per 100 parts by mass of the modified polyolefin (A).

6. The aqueous dispersion composition according to claim 1, wherein the modified polyolefin (A) is a propylene-α-olefin copolymer with a butene content of 2 to 35 mass% in the polyolefin component.

7. A paint comprising the aqueous dispersion composition of any one of claims 1 to 6.

8. An adhesive comprising the aqueous dispersion composition of any one of claims 1 to 6.

9. A coating film comprising the aqueous dispersion composition of any one of claims 1 to 6 from which an aqueous medium has been removed.

10. A laminate comprising a layer derived from the paint of claim 7.

11. A laminate comprising a layer derived from the adhesive of claim 8.
